# EUROPÄISCHE PATENTSCHRIFT

(11) **EP 2 212 378 B1**
(45) Veröffentlichungstag und Bekanntmachung des Hinweises auf die Patenterteilung: **27.08.2014**
(21) Anmeldenummer: 08843316.4
(22) Anmeldetag: 22.10.2008
(51) Int. Cl.: C08L 3/02, C08J 5/18

(54) **POLYMERES MATERIAL UND VERFAHREN ZU DESSEN HERSTELLUNG**
POLYMER MATERIAL AND METHOD FOR THE PRODUCTION THEREOF
MATERIAU POLYMERE ET SON PROCEDE D'ELABORATION

(30) Priorität: 22.10.2007 DE 102007050770
(43) Veröffentlichungstag der Anmeldung: 04.08.2010
(73) Patentinhaber: BIOTEC Biologische Naturverpackungen GmbH & Co. KG, 46446 Emmerich (DE)
(72) Erfinder: SCHMIDT, Harald, 46446 Emmerich (DE); HESS, Christoph, 47533 Kleve (DE); MATHAR, Johannes, 7041 GP's-Heerenberg (NL); HACKFORT, Ralf, 46446 Emmerich (DE)
(74) Vertreter: Cohausz & Florack
(86) Internationale Anmeldenummer: PCT/EP2008/064269
(87) Internationale Veröffentlichungsnummer: WO 2009/053382

(56) Entgegenhaltungen:
- EP-A- 0 596 437
- DE-A1- 19 822 979
- KR-A- 20030 022 914
- US-A- 5 635 550
- US-B1- 6 242 102
- KIM C-H ET AL: "REACTIVE BLENDS OF GELATINIZED STARCH AND POLYCAPROLACTONE-G-GLYCIDYL METHACRYLATE" JOURNAL OF APPLIED POLYMER SCIENCE, JOHN WILEY AND SONS INC. NEW YORK, US, Bd. 81, Nr. 6, 8. August 2001 (2001-08-08), Seiten 1507-1516, XP001012180 ISSN: 0021-8995

## Beschreibung

Die Erfindung betrifft ein stärkehaltiges polymeres Material, ein Verfahren zu dessen Herstellung sowie aus dem Material hergestellte Formteile, Folien und/oder Fasern.

Stärkehaltige polymere Materialien der eingangs genannten Art sind allgemein bekannt. Zu den wirtschaftlich bedeutsamsten Biokunststoffen zählt insbesondere thermoplastische Stärke bzw. thermoplastisch verarbeitbare Stärke (TPS). Thermoplastische Stärke wird im Allgemeinen aus nativer Stärke wie zum Beispiel Kartoffelstärke hergestellt. Um native Stärke thermoplastisch verarbeitbar zu machen, werden ihr Plastifizierungsmittel wie Sorbitol und/oder Glycerin hinzugefügt und das Gemisch in einem Extruder homogenisiert. Thermoplastische Stärke zeichnet sich durch einen geringen Wassergehalt aus, der im Allgemeinen weniger als 12 Gew.%, insbesondere weniger als 6 Gew.%, bezogen auf das Gesamtgewicht der thermoplastischen Stärke, beträgt. Die Herstellung und Eigenschaften von thermoplastischer Stärke werden beispielsweise in den Druckschriften EP 0 397 819 B1, WO 91/16375 A1, EP 0 537 657 B1 und EP 0 702 698 B1 beschrieben.

Thermoplastische Stärke ist beispielsweise unter dem Handelsnamen "Bioplast^{®} TPS" in Granulatform von der Biotec GmbH & Co. KG, Emmerich (Deutschland) kommerziell erhältlich.

Aus der US 5 635 550 ist eine Zusammensetzung bekannt, die thermoplastische Stärke sowie ein Polymer enthält, das als Kupplungsmittel fungiert und ausgewählt ist aus der Gruppe, die aus Polyolefinen besteht, die durch chemisch funktionelle Gruppen, die in Bezug auf die funktionellen Hydroxylgruppen der Stärke reaktiv sind, modifiziert sind. Die Zusammensetzung kann auch ein thermoplastisches Polymer enthalten.

Der Erfindung liegt die Aufgabe zugrunde, die mechanischen Eigenschaften der eingangs genannten stärkehaltigen Materialien sowie der daraus hergestellten Produkte (z.B. Formteile, Folien und/oder Fasern) zu verbessern.

Diese Aufgabe wird erfindungsgemäß durch ein polymeres Material gelöst, welches erhältlich ist durch Homogenisieren eines Gemischs enthaltend
- 40 bis 85 Gew.% Stärke und/oder Stärkederivat,
- 15 bis 55 Gew.% Weichmacher und
- 0,01 bis 7 Gew.% eines epoxidgruppenhaltigen Polymers,
unter Zuführen von thermischer und/oder mechanischer Energie und Einstellen des Wassergehaltes des Gemischs auf kleiner 7 Gew.%.

Vorteilhafte Ausgestaltungen der Erfindung sind in den Unteransprüchen beschrieben.

Ein wesentliches Merkmal des erfindungsgemäßen stärkehaltigen polymeren Materials ist die Zugabe eines epoxidgruppenhaltigen Polymers bei seiner Herstellung. Überraschend wurde festgestellt, dass die Gegenwart von epoxidgruppenhaltigen Polymeren als Additiv bei der Herstellung von stärkehaltigen polymeren Materialien zu einer wesentlichen Verbesserung der mechanischen Eigenschaften des Materials, insbesondere dessen Zugfestigkeit und Reißdehnung, führt.

Das erfindungsgemäße polymere Material zeichnet sich durch ausgezeichnete mechanische Eigenschaften aus. So kann eine aus dem polymeren Material hergestellte Folie eine Zugfestigkeit gemäß DIN 53455 von 2 bis 10 N/mm², insbesondere von 4 bis 8 N/mm² und/oder eine Reißdehnung gemäß DIN 53455 von 80 bis 200 %, insbesondere von 120 bis 180 %, aufweisen.

Das erfindungsgemäße Material ist durch Homogenisieren eines Gemischs enthaltend Stärke bzw. Stärkederivat, Weichmacher und epoxidgruppenhaltiges Polymer erhältlich.

Die Herstellung von stärkehaltigen thermoplastischen Polymeren durch Homogenisieren eines stärkehaltigen Ausgangsgemischs ist allgemein bekannt und erfolgt üblicherweise in einem Extruder. Geeignete Herstellungsverfahren für stärkehaltige thermoplastische Polymere sind beispielsweise in den Druckschriften EP 0 397 819 B1, WO 91/16375 A1, EP 0 537 657 B1 und EP 0 702 698 B1 beschrieben.

Die zur Herstellung des erfindungsgemäßen Materials eingesetzte Stärke bzw. das Stärkederivat sind vorzugsweise ausgewählt aus nativer Kartoffelstärke, Tapiokastärke, Reisstärke und Maisstärke.

Gemäß einer bevorzugten Ausführungsform der Erfindung enthält das Gemisch 45 bis 80 Gew.%, insbesondere 50 bis 75 Gew.%, vorzugsweise 55 bis 72 Gew.%, noch bevorzugter 58 bis 70 Gew.%, am bevorzugtesten 59 bis 67 Gew.% Stärke und/oder Stärkederivat.

Der Weichmacher bzw. das Plastifizierungsmittel zur Herstellung des erfindungsgemäßen Materials ist vorzugsweise ausgewählt aus der Gruppe bestehend aus Ethylenglykol, Propylenglykol, Glycerin, 1,4-Propandiol, 1,2-Butandiol, 1,3-Butandiol, 1,4-Butandiol, 1,5-Pentandiol, 1,5-Hexandiol, 1,6-Hexandiol, 1,2,6-Hexantriol, 1,3,5-Hexantriol, Neopentylglykol, Sorbitacetat, Sorbitdiacetat, Sorbitmonoethoxylat, Sorbitdiethoxylat, Sorbithexaethoxylat, Sorbitdipropoxylat, Aminosorbit, Trihydroxymethylaminomethan, Glucose/PEG, das Reaktionsprodukt von Ethylenoxid mit Glucose, Trimethylolpropanmonoethoxylat, Mannitmonoacetat, Mannitmonoethoxylat, Butylglucosid, Glucosemonoethoxylat, α-Methylglucosid, das Natriumsalz von Carboxymethylsorbit, Polyglycerinmonoethoxylat, Erythrit, Pentaerythrit, Arabit, Adonit, Xylit, Mannit, Idit, Galactit, Allit, Sorbit, mehrwertige Alkohole im Allgemeinen, Glycerinester, Formamid, N-Methylformamid, DMSO, Mono- und Diglyceride, Alkylamide, Polyole, Trimethylolpropan, Polyvinylalkohol mit 3 bis 20 Repetiereinheiten, Polyglycerine mit 2 bis 10 Repetiereinheiten sowie Derivate und/oder Mischungen davon. Insbesondere kommen Glycerin und/oder Sorbitol als Weichmacher in Frage.

Der Weichmacher weist vorzugsweise ein Löslichkeitsparameter (Hildebrand-Parameter) d(SI) von 30 bis 50 MPa^{1/2} innerhalb eines Temperaturbereichs von etwa 150 bis 300°C auf.

Der Gehalt an Weichmacher im Gemisch beträgt vorzugsweise 20 bis 50 Gew.%, insbesondere 25 bis 45 Gew.%, weiter bevorzugt 28 bis 42 Gew.%, noch bevorzugter 30 bis 40 Gew.% und am bevorzugtesten 35 bis 38 Gew.%, bezogen auf die Gesamtzusammensetzung.

Das erfindungsgemäße polymere Material enthält ferner ein epoxidgruppenhaltiges Polymer, wobei es sich vorzugsweise um ein epoxidgruppenhaltiges Copolymer handelt. Als epoxidgruppenhaltige Polymere bzw. Copolymere kommen insbesondere solche in Frage, die ein Molekulargewicht (M_{w}) von 1.000 bis 25.000, insbesondere 3.000 bis 10.000, aufweisen.

Vorzugsweise handelt es sich bei dem epoxidgruppenhaltigen Polymer um ein glycidyl(meth)acrylathaltiges Polymer. Ein geeignetes glycidyl(meth)acrylathaltige Polymer ist beispielsweise ein Copolymer aus (a) Styrol und/oder Ethylen und/oder Methylmethacrylat und/oder Methylacrylat und (b) Glycidyl(meth)acrylat. Besonders gut geeignet als glycidyl(meth)acrylathaltiges Polymer ist ein Copolymer, das ausgewählt ist aus der Gruppe bestehend aus Styrol-Methylmethacrylat-Glycidylmethacrylat, Ethylen-Methylacrylat-Glycidylmethacrylat und Ethylen-Glycidylmethacrylat. Darin ist Glycidyl(meth)acrylat bevorzugt in einer Menge von 1 bis 60 Gew.%, insbesondere 5 bis 55 Gew.%, weiter bevorzugt 45 bis 52 Gew.%, bezogen auf die Gesamtzusammensetzung des glycidyl(meth)acrylathaltigen Polymers, enthalten.

Als epoxidgruppenhaltige Polymere kommen ferner epoxidgruppenhaltige Copolymere auf Basis von Styrol, Ethylen, Acrylsäureester und/oder Methacrylsäureester in Frage.

Das Gemisch enthält vorzugsweise 0,01 bis 5 Gew.%, insbesondere 0,05 bis 3 Gew.%, noch bevorzugter 0,1 bis 2 Gew.% epoxidgruppenhaltiges Polymer, bezogen auf die Gesamtzusammensetzung.

Das Gemisch kann neben den Hauptbestandteilen Stärke bzw. Stärkederivat, Weichmacher, epoxidgruppenhaltiges Polymer und Wasser noch übliche Additive wie zum Beispiel Verarbeitungshilfsmittel, Weichmacher, Stabilisatoren, Antiflammmittel und/oder Füllstoffe enthalten.

Ferner kann das Gemisch noch weitere polymere Materialien, insbesondere biologisch abbaubare thermoplastische Polymere, enthalten. Auf diese Weise können Polymer-Blends hergestellt werden, die thermoplastische Stärke und mindestens ein weiteres thermoplastisches Material, insbesondere thermoplastischen Polyester, enthalten. Als weiteres thermoplastisches Material können insbesondere biologisch abbaubare Polymere wie Polyester, Polyesteramide, Polyesterurethane und/oder Polyvinylalkohol zugesetzt werden. Vorzugsweise enthält das Gemisch neben thermoplastischer Stärke jedoch keine weiteren biologisch abbaubaren thermoplastischen Polymere, insbesondere keine weiteren gemäß EN 13432 biologisch abbaubaren thermoplastischen Polymere. Gemäß einer weiteren bevorzugten Ausführungsform enthält das Gemisch neben thermoplastischer Stärke keine weiteren thermoplastischen Polymere.

Bei der Herstellung des erfindungsgemäßen polymeren Materials wird das Gemisch homogenisiert. Das Homogenisieren kann durch beliebige, dem auf dem Gebiet der Kunststofftechnik tätigen Fachmann geläufige Maßnahmen erfolgen. Vorzugweise erfolgt das Homogenisieren des Gemischs durch Dispergieren, Rühren, Kneten und/oder Extrudieren. Gemäß einer bevorzugten Ausführungsform der Erfindung wirken bei der Homogenisierung Scherkräfte auf das Gemisch ein. Geeignete Herstellungsverfahren für stärkehaltige thermoplastische Polymere, die auch auf die Herstellung des erfindungsgemäßen polymeren Materials analog anwendbar sind, sind beispielsweise in den Druckschriften EP 0 397 819 B1, WO 91/16375 A1, EP 0 537 657 B1 und EP 0 702 698 B1 beschrieben.

Gemäß einer bevorzugten Ausführungsform der Erfindung wird das Gemisch während des Homogenisierens (z. B. im Extruder) erwärmt, vorzugsweise auf eine Temperatur von 90 bis 200°C, insbesondere 120 bis 180°C, weiter bevorzugt 130 bis 160°C.

Bei der Herstellung des erfindungsgemäßen polymeren Materials wird der Wassergehalt des Gemischs auf kleiner 7 Gew. % eingestellt. Vorzugsweise wird der Wassergehalt des Gemischs auf 1,5 bis 6 Gew.%, am bevorzugtesten 1,5 bis 3 Gew.%, eingestellt. Es wurde festgestellt, dass bei den angegebenen Wassergehalten (insbesondere < 6 Gew.%) ein verbessertes Fließverhalten des Materials im Extruder sowie eine verringerte Mikrobläschenbildung erzielt werden kann.

Vorzugsweise wird der Wassergehalt des Gemischs auf wenigstens 1 Gew.%, insbesondere wenigstens 1,5 Gew.% eingestellt, da es sonst leicht zu thermisch bedingten Oxidationsprozessen und damit einhergehend zu unerwünschten Verfärbungen des Produktes kommen kann.

Vorzugsweise erfolgt die Einstellung des Wassergehalts durch Trocknen während des Homogenisierens. Der Trocknungsvorgang kann beispielsweise durch Entgasen des Gemischs bzw. der Schmelze, zweckmäßigerweise durch Abziehen von Wasserdampf während des Extrudierens, erfolgen.

Gemäß einer weiteren bevorzugten Ausführungsform der Erfindung besitzt das erfindungsgemäße polymere Material thermoplastische Eigenschaften. Vorzugsweise ist das Material thermoplastisch verarbeitbar.

Die erfindungsgemäßen polymeren Materialien eignen sich für die verschiedensten Zwecke. Insbesondere eignen sich die erfindungsgemäßen Materialien zur Herstellung von Formteilen, Folien oder Fasern. Die Erfindung betrifft folglich auch aus den erfindungsgemäßen Materialien hergestellte Formteile, Folien oder Fasern.

Schließlich betrifft die Erfindung auch ein Verfahren zur Herstellung eines polymeren Materials, welches durch folgende Verfahrensschritte gekennzeichnet ist:
(a) Herstellen eines Gemischs enthaltend
   - 40 bis 85 Gew.% Stärke und/oder Stärkederivat,
   - 15 bis 55 Gew.% Weichmacher und
   - 0,01 bis 7 Gew.% eines epoxidgruppenhaltigen Polymers,
(b) Homogenisieren des Gemischs unter Zuführen von thermischer und/oder mechanischer Energie und
(c) Einstellen des Wassergehaltes des Gemischs auf kleiner 7 Gew. %.

Nachfolgend wird die Erfindung anhand von Ausführungsbeispielen näher beschrieben.

### Beispiel 1

### Herstellen von glycidylhaltiger thermoplastischer Stärke (TPS)

Ein Gemisch aus nativer Kartoffelstärke, Glycerin, Sorbitol und epoxidgruppenhaltigem Copolymer auf Basis von Styrol-Methylmethacrylat-Glycidylmethacrylat in den unten angegebenen Mengenverhältnissen wurde in einen Zweiwellenextruder eingefüllt. Als epoxidgruppenhaltiges Polymer (Glycidyl-Additiv) wurde ein statistisches Copolymer auf Basis von Styrol-Methylmethacrylat-Glycidylmethacrylat mit einem Molekulargewicht M_{w} von etwa 6800 und einem Epoxygruppenäquivalentgewicht von 285 g/mol eingesetzt (Additiv A). Das Gemisch wurde im Extruder in einem Temperaturbereich von 130 bis 160°C intensiv gemischt, wobei die Schmelze gleichzeitig entgast wurde um dem Gemisch Wasser zu entziehen. Es entstand eine homogene Schmelze, die abgezogen und granuliert werden konnte. Der Wassergehalt der in der beschriebenen Weise homogenisierten, thermoplastisch verarbeitbaren Masse lag zwischen 2 und 4 Gew.%.

Durch das Mischen und Homogenisieren der nativen Stärke mit Glycerin und Sorbitol wurden kristalline Strukturen der Stärke aufgebrochen, so dass die entstehende, thermoplastische Stärke weitgehend amorph vorlag. Im Unterschied hierzu weist destrukturierte Stärke, welche aus nativer Stärke z. B. durch Erwärmen in Wasser hergestellt werden kann, noch eine gewisse Kristallinität auf. Die Beimengung von glycidylhaltigem Polymer bewirkt eine intra- und intermolekulare chemische Verknüpfung von Stärke, Glycerin und Sorbitol, welche sich signifikant auf die mechanischen Eigenschaften der produzierten, thermoplastischen Stärke auswirkt.

Aus dem hergestellten Material wurden Folien mit einer Dicke von ca. 250 µm durch Flachfolienextrusion hergestellt.

Hierzu wurde das Granulat in einen Einwellenextruder (L/D = 24, Einzug gekühlt, Sieb mit Lochplatte, 450 µm) gegeben, bei 155°C aufgeschmolzen, über eine Breitschlitzdüse ("Kleiderbügelgeometrie"), Düsenspalt 0,25 mm, zur Flachfolie ausgefahren und abgezogen.

### Beispiel 2

### Einfluss von Glycidyl-Additiv auf die mechanischen Eigenschaften von Folien aus thermoplastischer Stärke (TPS)

Es wurde eine thermoplastische Stärke aus nativer Kartoffelstärke (70 Gew.%), Glycerin (23,5 Gew.%), Sorbitol (5,5 bis 6,5 Gew.%) und epoxidgruppenhaltigem Copolymer auf Basis von Styrol-Methylmethacrylat-Glycidylmethacrylat als Glycidyl-Additiv gemäß der in Beispiel 1 beschriebenen Verfahrensweise hergestellt. Der Mengenanteil des Glycidyl-Additivs wurde dabei auf Kosten von Sorbitol zwischen 0 und 1 Gew.% variiert.

Als epoxidgruppenhaltiges Polymer (Glycidyl-Additiv) wurde ein statistisches Copolymer auf Basis von Styrol-Methylmethacrylat-Glycidylmethacrylat mit einem Molekulargewicht M_{W} von etwa 6800 und einem Epoxygruppenäquivalentgewicht von 285 g/mol eingesetzt (Additiv A).

Nach Compoundierung der verschiedenen Rezepturvarianten wurden Folien hergestellt und charakterisiert.

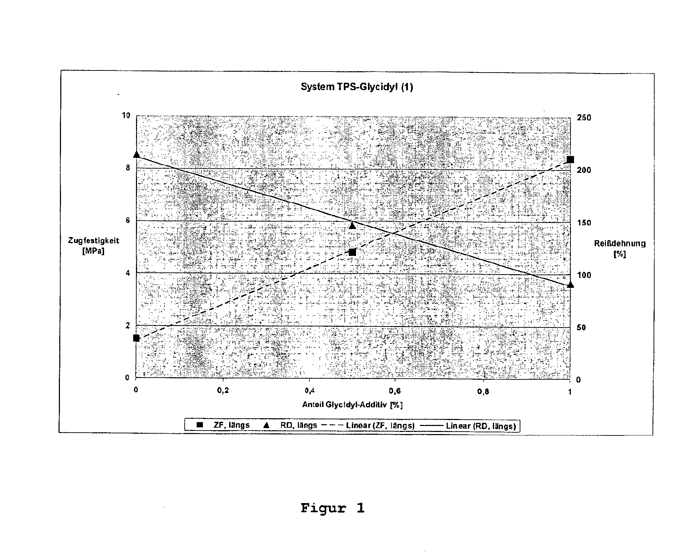

Im ersten Teilversuch wurden die mechanischen Eigenschaften Zugfestigkeit (ZF) und Reißdehnung (RD) von TPS-Folien mit unterschiedlichen Anteilen an Glycidyl-Additiv bestimmt. Figur 1 zeigt die resultierende Auftragung.

Aus Figur 1 geht hervor, dass mit einer Erhöhung der Konzentration des Glycidyl-Additivs ein Ansteigen der Zugfestigkeit bei gleichzeitigem Rückgang der Reißdehnung (Elastizität) einhergeht. Während mit zunehmendem Gehalt von Glycidyl-Additiv die Zugfestigkeit linear ansteigt, nimmt die Reißdehnung linear ab.

Ohne auf eine bestimmte Theorie festgelegt zu sein, wird dieser Effekt nach derzeitigem Kenntnisstand wie folgt erklärt: Es wird davon ausgegangen, dass eine merkliche Umsetzung des Glycidyl-Additivs mit der thermoplastischen Stärke stattgefunden hat. Den Epoxidgruppen des Kettenverlängerers stehen ausreichend Alkoholfunktionen der Stärke und des in der Rezeptur ebenfalls enthaltenen Weichmachers für eine Reaktion zur Verfügung.

Es ist unwahrscheinlich, dass eine ausschließliche oder bevorzugte Reaktion des Glycidyl-Additivs mit dem niedermolekularen Weichmacher (Glycerin, Sorbitol) der thermoplastischen Stärke (Mengenverhältnis der reaktiven Alkoholgruppen Stärke : Weichmacher in der Rezeptur ca. 1,6 : 1) eine derart signifikante Beeinflussung der ermittelten mechanischen Eigenschaften zur Folge gehabt hätte (maximal gewählter Additivgehalt der Rezeptur lediglich 1 Gew.%). Vielmehr lässt sich das Ansteigen der Zugfestigkeit bei gleichzeitigem Rückgang der Reißdehnung (Elastizität) mit einer durch das Additiv verursachten, kovalenten Vernetzung der Stärke (intra- und intermolekular) erklären.

### Beispiel 3

### Einfluss des Stärkegehalts in glycidylhaltiger thermoplastischer Stärke auf die mechanischen Eigenschaften daraus hergestellter Folien

In einem zweiten Versuch wurde die Auswirkung eines erhöhten Stärkeanteils in glycidylhaltiger thermoplastischer Stärke auf die mechanischen Eigenschaften entsprechender Folien ermittelt.

Es wurde eine thermoplastische Stärke aus nativer Kartoffelstärke (62,4 bis 65,5 Gew.%), Glycerin (30,6 Gew.%), Sorbitol (2,9 bis 6,5 Gew.%) und epoxidgruppenhaltigem Copolymer als Glycidyl-Additiv (0,5 bzw. 1,0 Gew.%) gemäß der in Beispiel 1 beschriebenen Verfahrensweise hergestellt. Der Mengenanteil der nativen Kartoffelstärke wurde dabei auf Kosten von Sorbitol zwischen 62,4 bis 65,5 Gew.% variiert. Der Mengenanteil des Glycidyl-Additivs variierte ebenfalls auf Kosten von Sorbitol zwischen 0,5 und 1,0 Gew.%.

Als epoxidgruppenhaltiges Polymer (Glycidyl-Additiv) wurde ein statistisches Copolymer auf Basis von Styrol-Methylmethacrylat-Glycidylmethacrylat mit einem Molekulargewicht M_{W} von etwa 6800 und einem Epoxygruppenäquivalentgewicht von 285 g/mol eingesetzt (Additiv A).

Als Vergleichsrezeptur wurde thermoplastische Stärke (TPS) ohne Glycidyl-Additiv aus nativer Kartoffelstärke (62,4 Gew.%), Glycerin (22,8 Gew.%) und Sorbitol (14,8 Gew.%) gemäß der in Beispiel 1 beschriebenen Vorgehensweise hergestellt (Standard TPS).

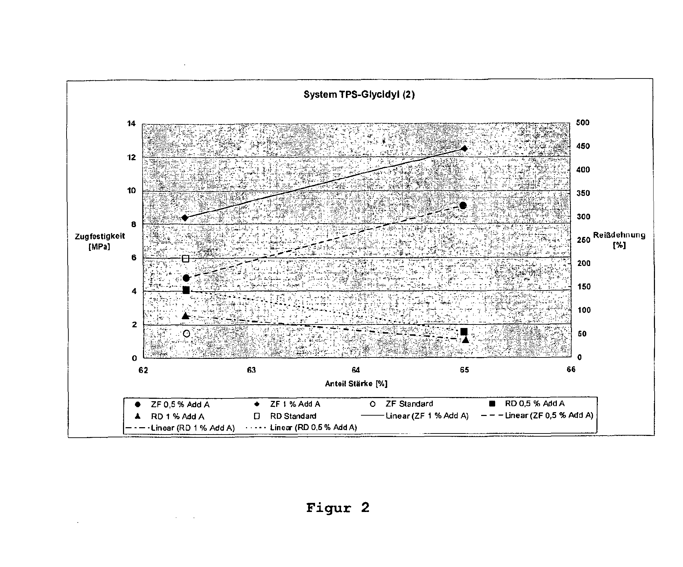

Die Ergebnisse sind in Figur 2 aufgetragen.

Aus Figur 2 geht hervor, dass durch Erhöhen des Stärkeanteils die durch das Glycidyl-Additiv bereits vervielfachte Zugfestigkeit der TPS-Folie weiter gesteigert werden kann. Die Reißdehnung, für eine Standardfolie größer 200 %, sackt im durchgeführten Versuch auf ca. 50 % ab. Die in Beispiel 2 (F 1) erzielten Festigkeitswerte können daher durch Erhöhung des Stärkegehalts zusätzlich gesteigert werden. Die Elastizität der Folien (Reißdehnung) nimmt entsprechend weiter ab.

Im Ergebnis lässt sich anhand der durchgeführten Versuche daher feststellen, dass das eingesetzte Glycidyl-Additiv signifikante Auswirkungen auf die mechanischen Eigenschaften von TPS-Folien hat. Durch Beimischung von 0,5 % (1 %) Glycidyl-Additiv zur TPS-Rezeptur lässt sich die Zugfestigkeit mehr als verdoppeln (vervierfachen). Entsprechend reduziert das Additiv die Elastizität der Folie um 25 % (50 %). Im untersuchten Bereich verlaufen die Effekte proportional bzw. antiproportional zur Additiv-Konzentration. Sie lassen sich durch Erhöhung des Stärkeanteils weiter verstärken.

Die Erfindung ist vorstehend anhand von Ausführungsbeispielen exemplarisch beschrieben worden. Dabei versteht sich, dass die Erfindung nicht auf die beschriebenen Ausführungsbeispiele beschränkt ist. Vielmehr ergeben sich für den Fachmann im Rahmen der Erfindung vielfältige Abwandlungs- und Modifikationsmöglichkeiten und der Schutzumfang der Erfindung wird insbesondere durch die nachfolgenden Patentansprüche festgelegt.

## Patentansprüche

1. Polymeres Material, erhältlich durch Homogenisieren eines Gemischs enthaltend
- 40 bis 85 Gew.% Stärke und/oder Stärkederivat,
- 15 bis 55 Gew.% Weichmacher und
- 0,01 bis 7 Gew.% eines epoxidgruppenhaltigen Polymers,
unter Zuführen von thermischer und/oder mechanischer Energie und Einstellen des Wassergehaltes des Gemischs auf kleiner 7 Gew.%.

2. Polymeres Material nach Anspruch 1, **dadurch gekennzeichnet, dass** das Gemisch 45 bis 80 Gew.%, insbesondere 50 bis 75 Gew.%, vorzugsweise 55 bis 72 Gew.%, noch bevorzugter 58 bis 70 Gew.%, am bevorzugtesten 59 bis 67 Gew.% Stärke und/oder Stärkederivat enthält.

3. Polymeres Material nach einem der vorstehenden Ansprüche, **dadurch gekennzeichnet, dass** das Gemisch 20 bis 50 Gew.%, insbesondere 25 bis 45 Gew.%, vorzugsweise 28 bis 42 Gew.%, noch bevorzugter 30 bis 40 Gew. % und am bevorzugtesten 35 bis 38 Gew.% Weichmacher enthält.

4. Polymeres Material nach einem der vorstehenden Ansprüche, **dadurch gekennzeichnet, dass** das Gemisch 0,01 bis 5 Gew.%, insbesondere 0,05 bis 3 Gew.%, noch bevorzugter 0,1 bis 2 Gew.% epoxidgruppenhaltiges Polymer enthält.

5. Polymeres Material nach einem der vorstehenden Ansprüche, **dadurch gekennzeichnet, dass** das polymere Material gemäß EN 13432 biologisch abbaubar ist.

6. Polymeres Material nach einem der vorstehenden Ansprüche, **dadurch gekennzeichnet, dass** der Weichmacher ausgewählt ist aus der Gruppe bestehend aus Ethylenglykol, Propylenglykol, Glycerin, 1,4-Propandiol, 1,2-Butandiol, 1,3-Butandiol, 1,4-Butandiol, 1,5-Pentandiol, 1,5-Hexandiol, 1,6-Hexandiol, 1,2,6-Hexantriol, 1,3,5-Hexantriol, Neopentylglykol, Sorbitacetat, Sorbitdiacetat, Sorbitmonoethoxylat, Sorbitdiethoxylat, Sorbithexaethoxylat, Sorbitdipropoxylat, Aminosorbit, Trihydroxymethylaminomethan, Glucose/PEG, das Reaktionsprodukt von Ethylenoxid mit Glucose, Trimethylolpropanmonoethoxylat, Mannitmonoacetat, Mannitmonoethoxylat, Butylglucosid, Glucosemonoethoxylat, α-Methylglucosid, das Natriumsalz von Carboxymethylsorbit, Polyglycerinmonoethoxylat, Erythrit, Pentaerythrit, Arabit, Adonit, Xylit, Mannit, Idit, Galactit, Allit, Sorbit, mehrwertige Alkohole im Allgemeinen, Glycerinester, Formamid, N-Methylformamid, DMSO, Mono- und Diglyceride, Alkylamide, Polyole, Trimethylolpropan, Polyvinylalkohol mit 3 bis 20 Repetiereinheiten, Polyglycerine mit 2 bis 10 Repetiereinheiten sowie Derivate und/oder Mischungen davon.

7. Polymeres Material nach einem der vorstehenden Ansprüche, **dadurch gekennzeichnet, dass** der Weichmacher ein Löslichkeitsparameter (Hildebrand-Parameter) d(SI) von 30 bis 50 MPa^{1/2} innerhalb eines Temperaturbereichs von etwa 150 bis 300°C aufweist.

8. Polymeres Material nach einem der vorstehenden Ansprüche, **dadurch gekennzeichnet,** das dass Gemisch als Weichmacher Glycerin und/oder Sorbitol enthält.

9. Polymeres Material nach einem der vorstehenden Ansprüche, **dadurch gekennzeichnet, dass** der Wassergehalt des Gemischs auf 1,5 bis 6 Gew.%, am bevorzugtesten 1,5 bis 3 Gew.%, eingestellt wird.

10. Polymeres Material nach einem der vorstehenden Ansprüche, **dadurch gekennzeichnet, dass** das epoxidgruppenhaltige Polymer ein Copolymer ist.

11. Polymeres Material nach einem der vorstehenden Ansprüche, **dadurch gekennzeichnet, dass** das epoxidgruppenhaltige Polymer ein glycidyl(meth)acrylathaltiges Polymer ist.

12. Polymeres Material nach Anspruch 11, **dadurch gekennzeichnet, dass** das glycidyl(meth)acrylathaltige Polymer ein Copolymer aus (a) Styrol und/oder Ethylen und/oder Methylmethacrylat und/oder Methylacrylat und (b) Glycidyl(meth)acrylat ist.

13. Polymeres Material nach Anspruch 11 oder 12, **dadurch gekennzeichnet, dass** das glycidyl(meth)acrylathaltige Polymer ein epoxidgruppenhaltiges Copolymer auf Basis von Styrol, Ethylen, Acrylsäureester und/oder Methacrylsäureester ist.

14. Polymeres Material nach einem der Ansprüche 11 bis 13, **dadurch gekennzeichnet, dass** das glycidyl(meth)acrylat-haltige Polymer ein Copolymer ist, welches ausgewählt ist aus der Gruppe bestehend aus Styrol-Methylmethacrylat-Glycidylmethacrylat, Ethylen-Methylacrylat-Glycidylmethacrylat und Ethylen-Glycidylmethacrylat.

15. Polymeres Material nach einem der Ansprüche 11 bis 14, **dadurch gekennzeichnet, dass** das glycidyl(meth)acrylathaltige Polymer Glycidyl(meth)acrylat in einer Menge von 1 bis 60 Gew.%, insbesondere 5 bis 55 Gew.%, weiter bevorzugt 45 bis 52 Gew.%, bezogen auf die Gesamtzusammensetzung des glycidyl(meth)acrylathaltigen Polymers, enthält.

16. Polymeres Material nach einem der vorstehenden Ansprüche, **dadurch gekennzeichnet, dass** das epoxidgruppenhaltige Polymer ein Molekulargewicht (Mw) von 1.000 bis 25.000 insbesondere 3.000 bis 10.000 aufweist.

17. Polymeres Material nach einem der vorstehenden Ansprüche, **dadurch gekennzeichnet, dass** das Homogenisieren des Gemischs durch Dispergieren, Rühren, Kneten und/oder Extrudieren erfolgt.

18. Polymeres Material nach einem der vorstehenden Ansprüche, **dadurch gekennzeichnet, dass** das Homogenisieren des Gemischs durch Extrusion erfolgt.

19. Polymeres Material nach einem der vorstehenden Ansprüche, **dadurch gekennzeichnet, dass** das Homogenisieren des Gemischs durch Einwirken von Scherkräften auf das Gemisch erfolgt.

20. Polymeres Material nach einem der vorstehenden Ansprüche, **dadurch gekennzeichnet, dass** das Gemisch beim Homogenisieren bzw. Extrudieren auf eine Temperatur von 90 bis 200°C, insbesondere 120 bis 180°C, weiter bevorzugt 130 bis 160°C, erwärmt wird.

21. Polymeres Material nach einem der vorstehenden Ansprüche, **dadurch gekennzeichnet, dass** der Wassergehalt des Gemischs auf kleiner 5 Gew.%, insbesondere kleiner 3 Gew.%, noch bevorzugter kleiner 3 Gew.%, eingestellt wird.

22. Polymeres Material nach einem der vorstehenden Ansprüche, **dadurch gekennzeichnet, dass** der Wassergehalt des Gemischs während des Homogenisierens eingestellt wird.

23. Polymeres Material nach einem der vorstehenden Ansprüche, **dadurch gekennzeichnet, dass** der Wassergehalt des Gemischs durch Entgasen des Gemischs, insbesondere durch Entgasen der Schmelze, eingestellt wird.

24. Polymeres Material nach einem der vorstehenden Ansprüche, **dadurch gekennzeichnet, dass** der Wassergehalt des Gemischs durch Trocknen des Gemischs während des Homogenisierens bzw. Extrudierens eingestellt wird.

25. Polymeres Material nach einem der vorstehenden Ansprüche, **dadurch gekennzeichnet, dass** das polymere Material thermoplastisch verarbeitbar ist.

26. Polymeres Material nach einem der vorstehenden Ansprüche, **dadurch gekennzeichnet, dass** eine aus dem polymeren Material hergestellte Folie eine Zugfestigkeit gemäß DIN 53455 von 2 bis 10 N/mm², insbesondere von 4 bis 8 N/mm² aufweist.

27. Polymeres Material nach einem der vorstehenden Ansprüche, **dadurch gekennzeichnet, dass** eine aus dem polymeren Material hergestellte Folie eine Reißdehnung gemäß DIN 53455 von 80 bis 200 %, insbesondere von 120 bis 180 %, aufweist.

28. Verwendung eines polymeren Materials gemäß einem der vorstehenden Ansprüche zur Herstellung von Formteilen, Folien oder Fasern.

29. Formteile, Folien oder Fasern, enthaltend ein polymeres Material gemäß einem der vorstehenden Ansprüche.

30. Verfahren zur Herstellung eines polymeren Materials gemäß einem der vorstehenden Ansprüche, **gekennzeichnet durch** folgende Verfahrensschritte:
(a) Herstellen eines Gemischs enthaltend
- 40 bis 85 Gew.% Stärke und/oder Stärkederivat,
- 15 bis 55 Gew.% Weichmacher und
- 0,01 bis 7 Gew.% eines epoxidgruppenhaltigen Polymers,
(b) Homogenisieren des Gemischs unter Zuführen von thermischer und/oder mechanischer Energie und
(c) Einstellen des Wassergehaltes des Gemischs auf kleiner 7 Gew.%.

## Claims

1. Polymeric material, obtainable by homogenising a mixture containing
- 40 to 85 % by weight of starch and/or starch derivative,
- 15 to 55 % by weight of plasticiser and
- 0.01 to 7 % by weight of a polymer containing epoxide groups,
with the supply of thermal and/or mechanical energy and adjusting the water content of the mixture to less than 7 % by weight.

2. Polymeric mixture according to claim 1, **characterised in that** the mixture contains 45 to 80 % by weight, in particular 50 to 75 % by weight, preferably 55 to 72 % by weight, more preferably 58 to 70 % by weight, most preferably 59 to 67 % by weight of starch and/or starch derivative.

3. Polymeric material according to any one of the preceding claims, **characterised in that** the mixture contains 20 to 50 % by weight, in particular 25 to 45 % by weight, preferably 28 to 42 % by weight, more preferably 30 to 40 % by weight and most preferably 35 to 38 % by weight of plasticiser.

4. Polymeric material according to any one of the preceding claims, **characterised in that** the mixture contains 0.01 to 5 % by weight, in particular 0.05 to 3 % by weight, more preferably 0.1 to 2 % by weight of polymer containing epoxide groups.

5. Polymeric material according to any one of the preceding claims, **characterised in that** the polymeric material is biodegradable according to EN 13432.

6. Polymeric material according to any one of the preceding claims, **characterised in that** the plasticiser is selected from the group consisting of ethylene glycol, propylene glycol, glycerol, 1,4-propanediol, 1,2-butanediol, 1,3-butanediol, 1,4-butanediol, 1,5-pentanediol, 1,5-hexanediol, 1,6-hexanediol, 1,2,6-hexanetriol, 1,3,5-hexanetriol, neopentyl glycol, sorbitol acetate, sorbitol diacetate, sorbitol monoethoxylate, sorbitol diethoxylate, sorbitol hexaethoxylate, sorbitol dipropoxylate, amino sorbitol, trihydroxymethylamino methane, glucose/PEG, the reaction product of ethylene oxide with glucose, trimethylolpropanemonoethoxylate, mannitol monoacetate, mannitol monoethoxylate, butylglucoside, glucose monoethoxylate, α-methylglucoside, the sodium salt of carboxymethyl sorbitol, polyglycerol monoethoxylate, erythritol, pentaerythritol, arabitol, adonitol, xylitol, mannitol, iditol, galactitol, allitol, sorbitol, polyvalent alcohols in general, glycerol esters, formamide, N-methylformamide, DMSO, mono- and diglycerides, alkylamides, polyols, trimethylol propane, polyvinyl alcohol with 3 to 20 repeating units, polyglycerols with 2 to 10 repeating units as well as derivatives and/or mixtures thereof.

7. Polymeric material according to any one of the preceding claims, **characterised in that** the plasticiser has a solubility parameter (Hildebrand parameter) d (SI) of 30 to 50 MPa^{1/2} within a temperature range of approximately 150 to 300 °C.

8. Polymeric material according to any one of the preceding claims, **characterised in that** the mixture contains glycerol and/or sorbitol as plasticiser.

9. Polymeric material according to any one of the preceding claims, **characterised in that** the water content of the mixture is adjusted to 1.5 to 6 % by weight, most preferably to 1.5 to 3 % by weight.

10. Polymeric material according to any one of the preceding claims, **characterised in that** the polymer containing epoxide groups is a copolymer.

11. Polymeric material according to any one of the preceding claims, **characterised in that** the polymer containing epoxide groups is a polymer containing glycidyl (meth)acrylate.

12. Polymeric material according to claim 11, **characterised in that** the polymer containing glycidyl (meth)acrylate is a copolymer of (a) styrene and/or ethylene and/or methylmethacrylate and/or methylacrylate and (b) glycidyl (meth)acrylate.

13. Polymeric material according to claim 11 or 12, **characterised in that** the polymer containing glycidyl (meth)acrylate is a copolymer containing epoxide groups based on styrene, ethylene, acrylic acid ester and/or methacrylic acid ester.

14. Polymeric material according to any one of claims 11 to 13, **characterised in that** the polymer containing glycidyl (meth)acrylate is a copolymer selected from the group consisting of styrene-methylmethacrylate-glycidylmethacrylate, ethylene-methylacrylate- glycidylmethacrylate and ethylene-glycidylmethacrylate.

15. Polymeric material according to any one of claims 11 to 14, **characterised in that** the polymer containing glycidyl (meth)acrylate contains glycidyl (meth)acrylate in a quantity of 1 to 60 % by weight, in particular 5 to 55 % by weight, more preferably 45 to 52 % by weight, based on the total composition of the polymer containing glycidyl (meth)acrylate.

16. Polymeric material according to any one of the preceding claims, **characterised in that** the polymer containing epoxide groups has a molecular weight (Mw) of 1,000 to 25,000, in particular 3,000 to 10,000.

17. Polymeric material according to any one of the preceding claims, **characterised in that** the homogenising of the mixture is carried out by dispersing, stirring, kneading and/or extrusion.

18. Polymeric material according to any one of the preceding claims, **characterised in that** the homogenising of the mixture is carried out by extrusion.

19. Polymeric material according to any one of the preceding claims, **characterised in that** the homogenising of the mixture is carried out by the effect of shearing forces on the mixture.

20. Polymeric material according to any one of the preceding claims, **characterised in that** during homogenising or extrusion, the mixture is heated to a temperature of 90 to 200 °C, in particular 120 to 180 °C, more preferably 130 to 160 °C.

21. Polymeric material according to any one of the preceding claims, **characterised in that** the water content of the mixture is adjusted to less than 5 % by weight, in particular to less than 3 % by weight, more preferably to less than 3 % by weight.

22. Polymeric material according to any one of the preceding claims, **characterised in that** the water content of the mixture is adjusted during homogenising.

23. Polymeric material according to any one of the preceding claims, **characterised in that** the water content of the mixture is adjusted by degassing the mixture, in particular by degassing the melt.

24. Polymeric material according to any one of the preceding claims, **characterised in that** the water content of the mixture is adjusted by drying the mixture during homogenising or extrusion.

25. Polymeric material according to any one of the preceding claims, **characterised in that** the polymeric material can be processed thermoplastically.

26. Polymeric material according to any one of the preceding claims, **characterised in that** a film produced from the polymeric material has a tensile strength according to DIN 53455 of 2 to 10 N/mm², in particular 4 to 8 N/mm².

27. Polymeric material according to any one of the preceding claims, **characterised in that** a film produced from the polymeric material has an elongation at break according to DIN 53455 of 80 to 200 %, in particular 120 to 180 %.

28. Use of a polymeric material according to any one of the preceding claims for producing mouldings, films or fibres.

29. Mouldings, films or fibres, containing a polymeric material according to any one of the preceding claims.

30. Process for producing a polymeric material according to any one of the preceding claims, **characterised by** the following steps:
(a) production of a mixture containing
- 40 to 85 % by weight of starch and/or starch derivative,
- 15 to 55 % by weight of plasticiser and
- 0.01 to 7 % by weight of a polymer containing epoxide groups,
(b) homogenising of the mixture with the supply of thermal and/or mechanical energy, and
(c) adjustment of the water content of the mixture to less than 7 % by weight.

## Revendications

1. Matériau polymère, pouvant être obtenu par homogénéisation d'un mélange contenant :
- 40 à 85 % en poids d'amidon et/ou d'un dérivé d'amidon,
- 15 à 55 % en poids d'un plastifiant et
- 0,01 à 7 % en poids d'un polymère contenant des groupes époxyde,
avec introduction d'énergie thermique et/ou mécanique et ajustement de la teneur en eau du mélange à moins de 7 % en poids.

2. Matériau polymère selon la revendication 1, **caractérisé en ce que** le mélange contient 45 à 80 % en poids, notamment 50 à 75 % en poids, de préférence 55 à 72 % en poids, de manière davantage préférée 58 à 70 % en poids, de manière préférée entre toutes 59 à 67 % en poids d'amidon et/ou de dérivé d'amidon.

3. Matériau polymère selon l'une quelconque des revendications précédentes, **caractérisé en ce que** le mélange contient 20 à 50 % en poids, notamment 25 à 45 % en poids, de préférence 28 à 42 % en poids, de manière davantage préférée 30 à 40 % en poids et de manière préférée entre toutes 35 à 38 % en poids de plastifiant.

4. Matériau polymère selon l'une quelconque des revendications précédentes, **caractérisé en ce que** le mélange contient 0,01 à 5 % en poids, notamment 0,05 à 3 % en poids, de manière davantage préférée 0,1 à 2 % en poids de polymère contenant des groupes époxyde.

5. Matériau polymère selon l'une quelconque des revendications précédentes, **caractérisé en ce que** le matériau polymère est biodégradable selon EN 13432.

6. Matériau polymère selon l'une quelconque des revendications précédentes, **caractérisé en ce que** le plastifiant est choisi dans le groupe constitué par l'éthylène glycol, le propylène glycol, la glycérine, le 1,4-propanediol, le 1,2-butanediol, le 1,3-butanediol, le 1,4-butanediol, le 1,5-pentanediol, le 1,5-hexanediol, le 1,6-hexanediol, le 1,2,6-hexanetriol, le 1,3,5-hexanetriol, le néopentylglycol, l'acétate de sorbitol, le diacétate de sorbitol, le monoéthoxylate de sorbitol, le diéthoxylate de sorbitol, l'hexaéthoxylate de sorbitol, le dipropoxylate de sorbitol, l'aminosorbitol, le trihydroxyméthylaminométhane, le glucose/PEG, le produit de réaction d'oxyde d'éthylène avec du glucose, le monoéthoxylate de triméthylolpropane, le monoacétate de mannitol, le monoéthoxylate de mannitol, le butylglucoside, le monoéthoxylate de glucose, l'α-méthylglucoside, le sel de sodium de carboxyméthylsorbitol, le monoéthoxylate de polyglycérine, l'érythritol, le pentaérythritol, l'arabitol, l'adonitol, le xylitol, le mannitol, l'iditol, le galactitol, l'allitol, le sorbitol, les alcools polyvalents en général, les esters de glycérine, le formamide, le N-méthylformamide, le DMSO, les mono- et diglycérides, les alkylamides, les polyols, le triméthylolpropane, l'alcool polyvinylique contenant 3 à 20 unités de répétition, les polyglycérines contenant 2 à 10 unités de répétition, ainsi que leurs dérivés et/ou mélanges.

7. Matériau polymère selon l'une quelconque des revendications précédentes, **caractérisé en ce que** le plastifiant présente un paramètre de solubilité (paramètre d'Hildebrand) d(SI) de 30 à 50 MPa^{1/2} dans une plage de température allant d'environ 150 à 300 °C.

8. Matériau polymère selon l'une quelconque des revendications précédentes, **caractérisé en ce que** le mélange contient de la glycérine et/ou du sorbitol en tant que plastifiant.

9. Matériau polymère selon l'une quelconque des revendications précédentes, **caractérisé en ce que** la teneur en eau du mélange est ajustée à 1,5 à 6 % en poids, de manière préférée entre toutes de 1,5 à 3 % en poids.

10. Matériau polymère selon l'une quelconque des revendications précédentes, **caractérisé en ce que** le polymère contenant des groupes époxyde est un copolymère.

11. Matériau polymère selon l'une quelconque des revendications précédentes, **caractérisé en ce que** le polymère contenant des groupes époxyde est un polymère contenant du (méth)acrylate de glycidyle.

12. Matériau polymère selon la revendication 11, **caractérisé en ce que** le polymère contenant du (méth)acrylate de glycidyle est un copolymère de (a) styrène et/ou éthylène et/ou méthacrylate de méthyle et/ou acrylate de méthyle et (b) (méth)acrylate de glycidyle.

13. Matériau polymère selon la revendication 11 ou 12, **caractérisé en ce que** le polymère contenant du (méth)acrylate de glycidyle est un copolymère contenant des groupes époxyde à base de styrène, d'éthylène, d'un ester de l'acide acrylique et/ou d'un ester de l'acide méthacrylique.

14. Matériau polymère selon l'une quelconque des revendications 11 à 13, **caractérisé en ce que** le polymère contenant du (méth)acrylate de glycidyle est un copolymère qui est choisi dans le groupe constitué par le styrène-méthacrylate de méthyle-méthacrylate de glycidyle, l'éthylène-acrylate de méthyle-méthacrylate de glycidyle et l'éthylène-méthacrylate de glycidyle.

15. Matériau polymère selon l'une quelconque des revendications 11 à 14, **caractérisé en ce que** le polymère contenant du (méth)acrylate de glycidyle contient du (méth) acrylate de glycidyle en une quantité de 1 à 60 % en poids, notamment de 5 à 55 % en poids, de manière davantage préférée de 45 à 52 % en poids, par rapport à la composition totale du polymère contenant du (méth)acrylate de glycidyle.

16. Matériau polymère selon l'une quelconque des revendications précédentes, **caractérisé en ce que** le polymère contenant des groupes époxyde présente un poids moléculaire (Mw) de 1 000 à 25 000, notamment de 3 000 à 10 000.

17. Matériau polymère selon l'une quelconque des revendications précédentes, **caractérisé en ce que** l'homogénéisation du mélange a lieu par dispersion, agitation, malaxage et/ou extrusion.

18. Matériau polymère selon l'une quelconque des revendications précédentes, **caractérisé en ce que** l'homogénéisation du mélange a lieu par extrusion.

19. Matériau polymère selon l'une quelconque des revendications précédentes, **caractérisé en ce que** l'homogénéisation du mélange a lieu par l'action de forces de cisaillement sur le mélange.

20. Matériau polymère selon l'une quelconque des revendications précédentes, **caractérisé en ce que** le mélange est porté lors de l'homogénéisation ou de l'extrusion à une température de 90 à 200 °C, notamment de 120 à 180 °C, de manière davantage préférée de 130 à 160 °C.

21. Matériau polymère selon l'une quelconque des revendications précédentes, **caractérisé en ce que** la teneur en eau du mélange est ajustée à moins de 5 % en poids, notamment à moins de 3 % en poids, de manière encore préférée à moins de 3 % en poids.

22. Matériau polymère selon l'une quelconque des revendications précédentes, **caractérisé en ce que** la teneur en eau du mélange est ajustée pendant l'homogénéisation.

23. Matériau polymère selon l'une quelconque des revendications précédentes, **caractérisé en ce que** la teneur en eau du mélange est ajustée par dégazage du mélange, notamment par dégazage de la masse fondue.

24. Matériau polymère selon l'une quelconque des revendications précédentes, **caractérisé en ce que** la teneur en eau du mélange est ajustée par séchage du mélange pendant l'homogénéisation ou l'extrusion.

25. Matériau polymère selon l'une quelconque des revendications précédentes, **caractérisé en ce que** le matériau polymère est usinable de manière thermoplastique.

26. Matériau polymère selon l'une quelconque des revendications précédentes, **caractérisé en ce qu'**une feuille fabriquée à partir du matériau polymère présente une résistance à la traction selon DIN 53455 de 2 à 10 N/mm², notamment de 4 à 8 N/mm².

27. Matériau polymère selon l'une quelconque des revendications précédentes, **caractérisé en ce qu'**une feuille fabriquée à partir du matériau polymère présente un allongement à la rupture selon DIN 53455 de 80 à 200 %, notamment de 120 à 180 %.

28. Utilisation d'un matériau polymère selon l'une quelconque des revendications précédentes pour la fabrication de pièces moulées, de feuilles ou de fibres.

29. Pièces moulées, feuilles ou fibres, contenant un matériau polymère selon l'une quelconque des revendications précédentes.

30. Procédé de fabrication d'un matériau polymère selon l'une quelconque des revendications précédentes, **caractérisé par** les étapes de procédé suivantes :
(a) la fabrication d'un mélange contenant :
- 40 à 85 % en poids d'amidon et/ou d'un dérivé d'amidon,
- 15 à 55 % en poids d'un plastifiant et
- 0,01 à 7 % en poids d'un polymère contenant des groupes époxyde,
(b) l'homogénéisation du mélange avec introduction d'énergie thermique et/ou mécanique et
(c) l'ajustement de la teneur en eau du mélange à moins de 7 % en poids.
